# EUROPÄISCHE PATENTSCHRIFT

(11) **EP 0 559 956 B1**
(45) Veröffentlichungstag und Bekanntmachung des Hinweises auf die Patenterteilung: **13.12.1995**
(21) Anmeldenummer: 92117903.2
(22) Anmeldetag: 20.10.1992
(51) Int. Cl.: F16H 7/12

(54) **Betätigungseinrichtung für eine Spannvorrichtung**
Activation device for tensioning mechanism
Dispositif d'actionnement pour organe tendeur

(30) Priorität: 07.03.1992 DE 4207322
(43) Veröffentlichungstag der Anmeldung: 15.09.1993
(73) Patentinhaber: Gustav Wahler GmbH u. Co, D-73730 Esslingen (DE)
(72) Erfinder: Peuker, Thomas, W-7300 Esslingen (DE); Tuschwitz, Peter, W-7300 Esslingen (DE); Wahler, Hans, W-7300 Esslingen (DE)
(74) Vertreter: Kratzsch, Volkhard, Dipl.-Ing.

(56) Entgegenhaltungen:
- EP-A- 0 329 855
- EP-A- 0 334 063
- WO-A-83/00731
- DE-C- 3 528 442
- GB-A- 2 181 814

## Beschreibung

Die Erfindung bezieht sich auf eine Betätigungseinrichtung für eine Spannvorrichtung gemäß dem Oberbegriff des Patentanspruchs 1.

Es ist eine Betätigungseinrichtung dieser Art bekannt (EP-A-32 98 55), bei der ein Zahnriemen oder eine Kette einer Brennkraftmaschine mit einer Spannrolle gespannt wird. Die Spannrolle wird über ein verschiebbares Betätigungsglied in Form eines in einem Spannergehäuse längsbeweglichen Druckelements an den Zahnriemen angedrückt. Die Anpreßkraft auf das Druckelement wird durch mehrere, wechselsinnig geschichtete Bimetall-Tellerfedern ausgeübt, die axial am einen Ende über einen Kolben auf das Druckelement arbeiten und die an der axial gegenüberliegenden Endseite an einem hydraulischen Dämpfungskolben abgestützt sind, der ebenfalls im Spannergehäuse enthalten ist. Der Dämpfungskolben enthält einen durch ein Rückschlagventil verschließbaren, durchgehenden axialen Ölkanal. Auf der dem Paket der Bimetall-Tellerfedern gegenüberliegenden Axialseite liegt am Dämpfungskolben ein hydraulisch beaufschlagter Vorschubkolben an, dessen Vorschublage durch eine mechanische Rückhaltevorrichtung gesichert ist. Der Vorschubkolben soll der selbsttätigen Nachstellung des Zahnriemens dienen. Das Druckelement besteht aus einem elektrisch leitenden Kontaktstift, der über eine daran befestigte Isolierhülse in einer elektrisch leitenden Kontakthülse längs geführt ist, wobei die Kontakthülse axial an dem Kolben abgestützt ist, der am einen axialen Ende des Pakets aus Bimetall-Tellerfedern angeordnet ist. Zwischen der Kontakthülse und dem Kontaktstift des Druckelements befindet sich eine vorgespannte Druckfeder, die den Kontaktstift axial gegen den Spannrollenträger andrückt. Der elektrisch leitende Kontaktstift bildet mit der elektrisch leitenden Kontakthülse zusammen eine Kontaktstelle, mit der ein Stromkreis, der ein Relais enthält, steuerbar ist. Bei zu niedriger Riemenvorspannung wird die Kontaktstelle zwischen dem Kontaktstift und der Kontakthülse geöffnet und der Stromkreis unterbrochen, so daß das Relais abfällt und ein Schaltsignal an einem Anzeigegerät ausgelöst wird, das ein optisches oder akkustisches Warnsignal gibt und auf die mangelhafte Riemenspannung aufmerksam macht. Das Warnsignal fordert dazu auf, die Riemenvorspannung z.B. durch manuelles Betätigen einer den Dämpfungskolben verschiebenden Nachstelleinrichtung zu erhöhen. Anstelle des Anzeigegeräts kann auch eine elektrische Pumpe vorgesehen sein, die Hydrauliköl zu einem Druckregelventil fördert, über das der Vorschubkolben mit Hydraulikdruck beaufschlagbar ist.

Ferner ist eine Spannvorrichtung für einen Riementrieb bekannt (DE-A-35 28 442),die einen feststehenden Teil und einen relativ zu letzterem drehbaren Teil aufweist, an dem eine Spannrolle drehbar gehalten ist, die am Riemen, insbesondere Keilriemen, der Brennkraftmaschine anliegt. Zwischen dem feststehenden und dem drehbaren Teil wirkt eine die Spannrolle an den Riemen andrückende Feder sowie eine Dämpfungsvorrichtung mit vom Betriebszustand abhängiger Dämpfkraft. Die Dämpfungseinrichtung weist ein den drehbaren Teil umschlingendes, mit einem Reibbelag versehenes Spannband und ein über einen Hebel betätigbares Spannelement für dieses Spannband auf. Durch mehr oder weniger starkes Anziehen des Hebels kann das Spannband eine Reibkraft auf den drehbaren Teil ausüben, wodurch eine Drehbewegung dieses drehbaren Teils und damit eine Schwenkbewegung der Spannrolle gedämpft wird. Durch entsprechend starkes Verspannen des Spannbandes können der drehbare Teil mit Spannrolle daran festgestellt werden. Mit der Dämpfung der Schwenkbewegung der Spannrolle wird ein Riemenflattern unterdrückt. Die Betätigung des Hebels, über den das Spannband mehr oder weniger gespannt wird, kann auf elektrischem, hydraulischem oder pneumatischem Wege erfolgen.

Es ist eine Betätigungseinrichtung bekannt, bei der am freien Ende des Betätigungsgliedes ein querabstrebender Arm befestigt, der gelenkig mit einem Übertragungshebel verbunden ist, weicher in Abstand von diesem Gelenk schwenkbar gehalten ist und die um eine davon beabstandete Achse drehbare Spannrolle trägt, die bei Verwendung der Spannvorrichtung für z.B. einen Zahnriemen einer Brennkraftmaschine am Zahnriemen von außen her anliegt. Eine Vorwärtsverschiebung des Betätigungsgliedes hat dabei eine Schwenkbetätigung der Spannrolle derart zur Folge, daß die Spannrolle sich vom Zahnriemen entfernt, so daß dadurch der Zahnriemen dementsprechend entlastet und z.B. zu einer Anpassung an einen verlängerten Achsabstand freigegeben ist. Der Einsatz einer Spannvorrichtung für den Zahnriemen einer Brennkraftmaschine hat folgenden Vorteil. Bekanntlich nimmt bei Erwärmung der Brennkraftmaschine durch Ausdehnung des Motorblockes der Abstand zwischen Kurbelwelle und Nockenwelle zu, was beim Zahnriemen eine Erhöhung der Riemenspannung zur Folge hat. Diese erhöhte Riemenspannung ist schädlich und wird dadurch kompensiert, daß das Betätigungsglied dann temperaturabhängig ausgeschoben wird und eine Betätigung der Spannrolle unter Entlastung des Zahnriemens, wie dies eingangs erläutert wurde, zur Folge hat. Wird somit die Spannrolle vom Zahnriemen etwas weggeschwenkt, so wird dadurch die bei entstandenem größeren Achsabstand erhöhte Riemenspannung wieder auf das gewünschte Maß reduziert. Im umgekehrten Fall, also bei Abkühlung der Brennkraftmaschine, verringert sich der Achsabstand zwischen Kurbelwelle und Nockenwelle, so daß zur Beibehaltung der gewünschten Riemenspannung die Spannrolle den Zahnriemen stärker andrücken muß. Dem wird ebenfalls dadurch Rechnung getragen, daß dann temperaturabhängig das Betätigungsglied durch eine nun freigegebene Rückstellfeder eingeschoben wird, was ein stärkeres Heranschwenken der Spannrolle an den Zahnriemen zur Folge hat. Das Betätigungsglied der bekannten Betätigungseinrichtung ist im übrigen für sich mittels einer Feder vorgespannt, die deutlich schwächer als die zuvor erläuterte Rückstellfeder ist. Auf diese Weise ist das Betätigungsglied temperaturunabhängig relativ zum übrigen Teil der Betätigungseinrichtung mittels dieser eigenen Feder verschiebbar, so daß auf diese Weise eine selbsttätige Anpassung dar Spannrolle an temperaturunabhängig erfolgende Längenänderungen des Zahnriemens möglich ist, insbesondere eine selbsttätige, temperaturunabhängige Anpassung an z.B. alterungsbedingt eintretende Verlängerungen des Zahnriemens. Diese Betätigungseinrichtung hat sich in der Paxis bewährt.

Der Erfindung liegt die Aufgabe zugrunde, eine Betätigungseinrichtung der eingangs genannten Art zu schaffen, die einfach, kostengünstig, leicht und kompakt ist und selbst bei etwaiger Schwingungsanregung, insbesondere im kalten Zustand, nicht in Schwingung versetzbar ist und somit eine noch vergrößerte Lebensdauer hat.

Die Aufgabe ist bei einer Betätigungseinrichtung der eingangs genannten Art gemäß der Erfindung durch die Merkmale im Kennzeichnungsteil des Anspruchs 1 gelöst.

Durch diese Schwingungsdämpfungseinrichtung ist erreicht, daß vor allem im kalten Zustand der Brennkraftmaschine beim Anlauf entstehende Schwingungen die Betätigungseinrichtung nicht zur Schwingung anregen, sondern die Betätigungseinrichtung statt dessen gedämpft ist und nicht schwingen kann. Dadurch wird der Verschleiß noch weiter reduziert und die Lebensdauer der Betätigungseinrichtung noch gesteigert. Außerdem wird die Bildung etwaiger störender Geräusche im Bereich der Betätigungseinrichtung verhindert.

Eine vorteilhafte Ausgestaltung ergibt sich aus Anspruch 2. Weitere vorteilhafte Ausgestaltungen enthalten die Ansprüche 3 bis 6. Es versteht sich, daß die mindestens eine Bremseinrichtung, die die Schwingungsdämpfungseinrichtung aufweist, prinzipiell an jeder geeigneten Stelle unmittelbar am Betätigungsglied oder mittelbar am Betätigungsglied, z.B. an einem mit dem Betätigungsglied verbundenen Teil, z.B. dem Kolben, angreifen kann. Bereits eine derartige Bremseinrichtung kann das Betätigungsglied so weit bremsen, daß Schwingungen vermieden sind. Dabei versteht es sich, daß vielfältige Arten von Bremseinrichtungen im Rahmen der Erfindung liegen, und zwar mechanische Bremseinrichtungen, druckmittelbetriebene Bremseinrichtungen, elektromagnetische Bremseinrichtungen od. dgl.

Zusätzlich zu der mindestens einen Bremseinrichtung oder statt dieser kann die Schwingungsdämpfungseinrichtung auch einen Gasdämpfer, insbesondere einen Luftdämpfer, aufweisen. Weitere vorteilhafte Ausgestaltungen dazu sind in den Ansprüchen 8 bis 23 enthalten. Die Schwingungsdämpfungseinrichtung wirkt schwingungsdämpfend durch Drosselung des im Kompressionsraum enthaltenen und bei der Axialbewegung des Betätigungsgliedes beaufschlagten, z.B. komprimierten oder verdrängten, Mediums. Dabei kann die Drosselung der mittels einer Bremseinrichtung erreichten Abbremsung überlagert sein oder allein die Schwingungsdämpfung bewirken. Eine Drosselung ist z.B. durch einen Ringspalt zwischen Kolben und Zylinder erreichbar, wobei die Spaltgröße und Spaltlänge die Stärke der Drosselung bestimmt. Auch ist eine Drosselung durch Verbindungskanäle möglich, wobei die Drosselung durch eine verstellbare, den Kanal steuernde Drossel auch noch steuerbar sein kann. Es versteht sich, daß alle möglichen Drosselungen im Bereich des Zylinders und/oder Kolbens und/oder Betätigungselements im Rahmen der Erfindung liegen.

Eine weitere vorteilhafte Ausgestaltung ergibt sich aus Anspruch 24 mit weiteren Ausgestaltungen dazu in den Ansprüchen 25 bis 31. Mittels mindestens eines Ringes, der z.B. zwischen dem Zylinder und dem Kolben wirksam ist oder statt dessen oder zusätzlich zwischen dem Gehäuse und dem Betätigungsglied wirksam ist, ist ebenfalls eine Drosselung und somit eine Schwingungsdämpfung möglich. Alternativ dazu oder zusätzlich dazu kann der Ring auch zur Erhöhung der Reibung beitragen und somit eine Schwingungsdämpfung durch Abbremsung erfolgen. Ferner kann der Ring als Kolbenring gestaltet sein, so daß darüber der Ringspalt zwischen der äußeren Umfangsfläche des Ringes und der inneren Umfangsfläche des Zylinders im Sinne der gewünschten Drosselung und somit Schwingungsdämpfung vorgegeben werden kann.

Eine andere vorteilhafte Ausgestaltung ergibt sich aus Anspruch 32. Ein solcher federnder Hutteil führt bei der Axialverschiebung des Betätigungsgliedes mit Hutteil dadurch zur Schwingungsdämpfung, daß dann im Kompressionsraum enthaltenes Medium stärker komprimiert wird und der Hutteil dadurch zu einer etwaigen Bewegung radial von außen nach innen beaufschlagt wird und somit zwischen dem Hutteil und der inneren Umfangsfläche des Zylinders mehr oder weniger große Bypaßräume freigibt und somit eine mehr oder weniger große Drosselung und damit Abdämpfung der Verschiebebewegung des Betätigungsgliedes erreicht wird.

Eine andere vorteilhafte Ausgestaltung ergibt sich aus Anspruch 33. Eine solche elektromagnetische Bremsung oder Verzögerung des Kolbens und/oder des Betätigungsgliedes führt ebenfalls zu einer Schwingungsdämpfung und hat im übrigen den Vorteil, daß mit einfachen Mitteln die Bremswirkung elektrisch steuerbar ist durch Veränderung des elektrischen Feldes. Eine weitere Ausgestaltung dazu ergibt sich aus Anspruch 34. Die schwingungsdämpfende Wirkung läßt sich durch die Polarität und/oder die Stärke des Stromes bzw. der Spannung in der Spule mit einfachen Mitteln steuern.

Weitere vorteilhafte Ausgestaltungen ergeben sich aus den Ansprüchen 35 bis 38.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben.

Die Erfindung ist nachfolgend anhand von in den Zeichnungen gezeigten Ausführungsbeispielen näher erläutert. Es zeigen:
- Fig. 1: einen schematischen axialen Längsschnitt mit teilweiser Seitenansicht einer Spannvorrichtung ohne Spannrolle gemäß einem ersten Ausführungsbeispiel,
- Fig. 2: einen schematischen Schnitt etwa entsprechend demjenigen in Fig. 1 gemäß einem zweiten Ausführungsbeispiel,
- Fig. 3a und 3b: jeweils einen schematischen Schnitt einer Hälfte einer Spannvorrichtung gemäß einem dritten bzw. vierten Ausführungsbeispiel,
- Fig. 4: einen schematischen Schnitt eines Teils einer Spannvorrichtung gemäß einem fünften Ausführungsbeispiel,
- Fig. 5 bis 12: jeweils einen schematischen axialen Längsschnitt eines Teils einer Spannvorrichtung gemäß einem sechsten bzw. siebten bzw. ... dreizehnten Ausführungsbeispiel,
- Fig. 13: eine schematische Ansicht mit teilweisem Schnitt eines Kolbens mit Betätigungsglied gemäß einem vierzehnten Ausführungsbeispiel.

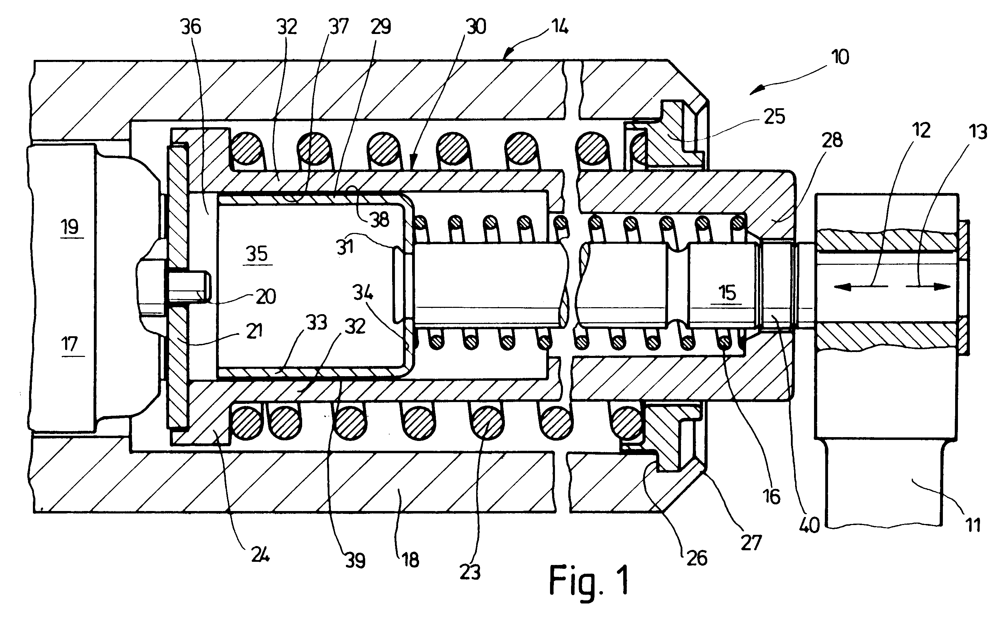

Beim ersten Ausführungsbeispiel in Fig. 1 ist eine Spannvorrichtung 10 gezeigt, die für Kettentriebe, Riementriebe od. dgl., und insbesondere für Zahnriemen einer Brennkraftmaschine, bestimmt ist. Zur Spannvorrichtung 10 gehört eine nicht weiter gezeigte Spannrolle, die über einen nicht gezeigten gelenkig bewegbaren Hebel betätigbar ist, wobei dieser nicht gezeigte Hebel z.B. von einem Glied 11, mit dem der Hebel gelenkig verbunden ist, betätigbar ist. Die Betätigung des nicht gezeigten Hebels und der z.B. daran drehbar gelagerten Spannrolle erfolgt in dem Sinn, daß eine Axialbewegung des Gliedes 11 in Pfeilrichtung 12 zum Andrücken und eine gegensinnige Bewegung in Pfeilrichtung 13 zum Entlasten, z.B. Wegbewegen, der Spannrolle führt. Die nicht gezeigte Spannrolle ist mittels einer Betätigungseinrichtung 14 temperaturabhängig betätigbar. Die Betätigungseinrichtung 14 weist für die Betätigung ein auf die Spannrolle arbeitendes Betätigungsglied 15 auf, welches unter der Vorspannung einer relativ schwachen Feder 16 steht, die insbesondere als Druckfeder ausgebildet ist. Die Betätigungseinrichtung 14 weist ferner ein zum Betätigungsglied 15 z.B. koaxiales thermostatisches Betätigungselement 17 auf, das z.B. ortsfest in einem Rohrteil 18 gehalten ist. Das thermostatische Betätigungselement 17 enthält in einem Gehäuse 19 einen Dehnstoff, der bei Temperaturerhöhung sein Volumen vergrößert und dann einen Arbeitskolben 20 in Richtung des Pfeiles 13 ausschiebt, der innerhalb des Gehäuses 19 enthalten und aus diesem ausschiebbar ist, wenn sich die Temperatur des Dehnstoffes im Gehäuse 19 erhöht. Der Arbeitskolben 20 wirkt dann formschlüssig auf den Boden 21 als Teil eines Gehäuses 22, an dem der Boden 21 anliegt oder befestigt ist oder mit dem der Boden 21 einstückig ist. Eine Ausschiebbewegung des Arbeitskolbens 20 in Pfeilrichtung 13 relativ zum ortsfest gehaltenen Gehäuse 19 und Rohrteil 18 führt zu einer Axialverschiebung des Gehäuses 22 in Pfeilrichtung 13 gegen die Wirkung einer axial wirkenden zugeordneten Rückstellfeder 23, die z.B. als zylindrische Schraubenfeder ausgebildet ist und einerseits an einem Ende des Rohrteiles 18 und andererseits an einem Ringrand 24 des Gehäuses 22 mit ihren axialen Enden anliegt. Das dem Ringrand 24 abgewandte Ende der Rückstellfeder 23 ist hier an einer Scheibe 25 axial abgestützt, die in einer Aufnahme 26 am zugeordneten Ende des Rohrteiles 18 abgestützt und mittels eines umgebördelten Bördelrandes 27 des Rohrteiles 18 unverlierbar gehalten ist. Die Rückstellfeder 23 ist bestrebt, das Gehäuse 22 und über dieses den Arbeitskolben 20 in Fig. 1 nach links in die Ausgangsstellung gemäß Pfeil 12 zurückzustellen. Dies hat im Bereich der nicht gezeigten Spannrolle zur Folge, daß dann die Spannrolle in Richtung an den nicht gezeigten Kettentrieb, Riementrieb, Zahnriemen od. dgl. angedrückt wird. Eine dazu gegensinnige Ausschubbewegung des Arbeitskolbens 20 entgegen der Feder 23 und in Richtung des Pfeiles 13 hat zur Folge, daß vom Arbeitskolben 20 über den Boden 21 das Gehäuse 22 in Pfeilrichtung 13 axial verschoben wird, und dies gegensinnig zur Rückstellfeder 23. Dadurch wird das Glied 11 in Pfeilrichtung 13 vorgeschoben, wodurch über nicht gezeigte geeignete Gelenkübertragung die Abstützrolle entlastet wird und im Sinne einer Reduzierung der Kettenkraft, Riemenkraft oder Zahnriemenkraft od. dgl. wirksam ist.

Bei Abkühlung der Temperatur des Dehnstoffes im Gehäuses 19 reduziert dieser sein Volumen, so daß über die Rückstellfeder 23 und über das Gehäuse 22 der Arbeitskolben 20 und über das Gehäuse 22 das Betätigungsglied 15 in Richtung des Pfeiles 12 zurück verstellt wird, was auf seiten der nicht gezeigten Spannrolle zu einem Andrücken dieser an den Kettentrieb, Riementrieb, Zahnriemen od. dgl. führt.

Das Betätigungsglied 15 der Betätigungseinrichtung 14 ist koaxial zum Gehäuse 22 angeordnet und relativ dazu axial verschiebbar, und zwar gegen die Wirkung der Feder 16, die im Verhältnis zur Rückstellfeder 23 wesentlich schwächer und wie diese als Druckfeder ausgebildet ist. Die Feder 16 ist mit einem axialen Ende am Gehäuse 22 z.B. im Bereich eines in Fig. 1 rechten Endabschnittes 28 abgestützt. Das andere Ende der Feder 16 ist an einem Kolben 29 abgestützt, der Bestandteil einer Schwingungsdämpfungseinrichtung 30 ist. Der Kolben 29 ist beim ersten Ausführungsbeispiel gemäß Fig. 1 mit dem Betätigungsglied 15 fest und dicht verbunden, und zwar im Bereich 31. Über die Feder 16 ist somit das Betätigungsglied 15 vom Gehäuse 22 federnd abgekoppelt. Bei nicht aktiviertem thermostatischen Betätigungselement 17 wird somit über die sich entspannende Feder 16 das Betätigungsglied 15 mitsamt dem Kolben 29 axial in Richtung des Pfeiles 12 und so beaufschlagt, daß das Glied 11 die nicht weiter gezeigte Spannrolle an den Kettentrieb, Riementrieb, Zahnriemen od. dgl. im Sinne einer Riemenspannung andrückt. In gleicher Richtung und Weise wirkt auch die Rückstellfeder 23.

Ist der mittels der Spannrolle gespannte Riemen z.B. ein Zahnriemen einer Brennkraftmaschine, so führt im Betrieb eine Temperaturerhöhung der Brennkraftmaschine dazu, daß sich diese ausdehnt, was eine Erhöhung des Abstandes zwischen der Achse der Kurbelwelle einerseits und der Achse der Nockenwelle andererseits zur Folge hat, was hinsichtlich eines über eine Scheibe an der Kurbelwelle und der Nockenwelle geführten Zahnriemens bedingt, daß dessen Riemenspannung dadurch zunimmt. Dies muß im Betrieb durch Reduzierung der Anpreßkraft der Spannrolle ausgeglichen werden. Dies geschieht dadurch, daß aufgrund der erhöhten Temperatur der Arbeitskolben 20 des thermostatischen Betätigungselementes 17 gegen die Wirkung der Rückstellfeder 23 ausgefahren wird. Dadurch wird das Gehäuse 22 in Fig. 1 in Pfeilrichtung 13 vorgeschoben und mit diesem auch das Betätigungsglied 15 und das daran angebrachte Glied 11, wodurch die Spannrolle vom Zahnriemen wegbewegt wird. Beim Erkalten der Brennkraftmaschine erfolgt eine gegensinnige Bewegung durch Rückstellung über die Rückstellfeder 23. Die Feder 16 bewirkt bei nicht aktiviertem Betätigungselement 17 und Gehäuse 22 eine federelastische Anpassung des Betätigungsgliedes 15 und damit des Gliedes 11 und der Spannrolle an sonstige Änderungen der Riemenspannung, z.B. solche, die sich durch zunehmende Lebensdauer des Zahnriemens und sich dadurch einstellende Verlängerungen des letzteren ergeben. Der aufgrund der Feder 16 eingeführte Nachteil liegt darin, daß das System, bestehend aus Betätigungsglied 15 und Feder 16, im Betrieb der Spannvorrichtung 10 zu Schwingungen neigt, vor allem im kalten Zustand. Derartige Schwingungen werden durch die Schwingungsdämpfungseinrichtung 30 ausgeglichen, die auf das Betätigungsglied 15 arbeitet. Die Schwingungsdämpfungseinrichtung 30 weist einen Gasdämpfer, insbesondere Luftdämpfer, auf, der durch den Kolben 29 gebildet ist und der ferner einen Zylinder 32 aufweist, innerhalb dem der Kolben 29 verschiebbar ist. Dabei ist im überwiegend axialen Bereich zwischen dem Kolben 29 und dem Zylinder 32 auf zumindest einer axialen Seite des Kolbens, in Fig. 1 auf der linken Seite des Kolbens 29, ein Gasvolumen, insbesondere Luftvolumen, vorhanden, welches bei Bewegung des Betätigungsgliedes 15 in Pfeilrichtung 12 komprimierbar und bei gegensinniger Bewegung in Pfeilrichtung 13 dekomprimierbar ist. Der Zylinder 32 ist aus einem Teil des Gehäuses 22 gebildet, welches die Feder 16 enthält. Beim ersten Ausführungsbeispiel gemäß Fig. 1 ist der Kolben 29 mit dem Betätigungsglied 15 fest verbunden. Der Kolben 29 ist hier als Topfkolben ausgebildet, der eine im wesentlichen zylindrische Kolbenwandung 33 und einen Kolbenboden 34 aufweist. Dabei ist das Innere 35 des hier topfförmigen Kolbens 29 zum Zylinderraum 36 hin geöffnet, der zwischen dem Kolben 29 einerseits und dem Boden 21 andererseits gebildet ist. Der Zylinderraum 36 enthält ein komprimierbares Volumen, insbesondere Luftvolumen. Zwischen der inneren Umfangsfläche 37 des Zylinders 32 und der äußeren Umfangsfläche 38 des Kolbens 29 ist ein definierter Luftspalt 39 vorgesehen, der eine Drossel bildet und zu der in Fig. 1 rechts befindlichen Seite hin entlüftet ist, die dem Kompressionsraum, gebildet durch das Innere 35 und den Zylinderraum 36, abgewandt ist. Der Luftspalt 39 zwischen dem Kolben 29 und dem Zylinder 32 ist z.B. etwa 1/10 mm oder größer bemessen. Aufgrund des Luftspaltes 39, dessen Größe dem Bedarf entsprechend einstellbar ist, ist eine Dämpfung bei der Bewegung des Kolbens 29 im Zylinder 32 und somit eine Dämpfung einer etwaigen Schwingung des Betätigungsgliedes 15 erreichbar. Die innere Umfangsfläche 37 des Zylinders 32 und/oder die äußere Umfangsfläche 38 des Kolbens 29 kann bedarfsweise mit einer nicht weiter gezeigten verschleißfesten Schicht, insbesondere einer Beschichtung, versehen sein. Diese Schicht macht es möglich, hinsichtlich der inneren Umfangsfläche 37 bzw. äußeren Umfangsfläche 38 die Genauigkeiten zu verwirklichen, die nötig sind, um einen Luftspalt 39 vorgegebener Größe reproduzierbar verwirklichen zu können.

Beim ersten Ausführungsbeispiel in Fig. 1 weist der Zylinder 32 als Zylinderboden 21 eine vom übrigen Teil des Zylinders 32 separate Platte auf, die mit dem Zylinder 32 fest verbunden ist und vom ausschiebbaren Teil, insbesondere Arbeitskolben 20, des thermostatischen Betätigungselements 17, insbesondere Dehnstoffelements, gegen die Wirkung der Rückstellfeder 23 verschiebbar ist. Der als separate Platte gestaltete Boden 21 des Zylinders 32 liegt axial an dem etwa rohrförmigen Gehäuse 22 an, welches mittels der Rückstellfeder 23 gegen den Boden 21 angedrückt ist und bei Betätigung des thermostatischen Betätigungselements 17 über den Boden 21 und gegen die Wirkung der Rückstellfeder 23 in Pfeilrichtung 13 verschiebbar ist.

Das Betätigungsglied 15 weist einen Stößel 40 auf, der zum etwa rohrförmigen Gehäuse 22 koaxial verläuft, mit dem Kolben 29 fest verbunden ist und aus dem Gehäuse 22 in Fig. 1 nach rechts hin herausgeführt ist. An diesem Stößel 40 bzw. dem daran festen Kolben 29 greift die rückstellende Feder 16 an.

Beim ersten Ausführungsbeispiel gemäß Fig. 1 ist die schwingungsdämpfende Wirkung der Schwingungsdämpfungseinrichtung 30 somit insbesondere auf den Luftspalt 39 zwischen dem Kolben 29 und dem Zylinder 32 zurückzuführen, wobei die Größe des Luftspalts 39 entsprechend dem gewünschten Dämpfungsverhalten dimensioniert werden kann.

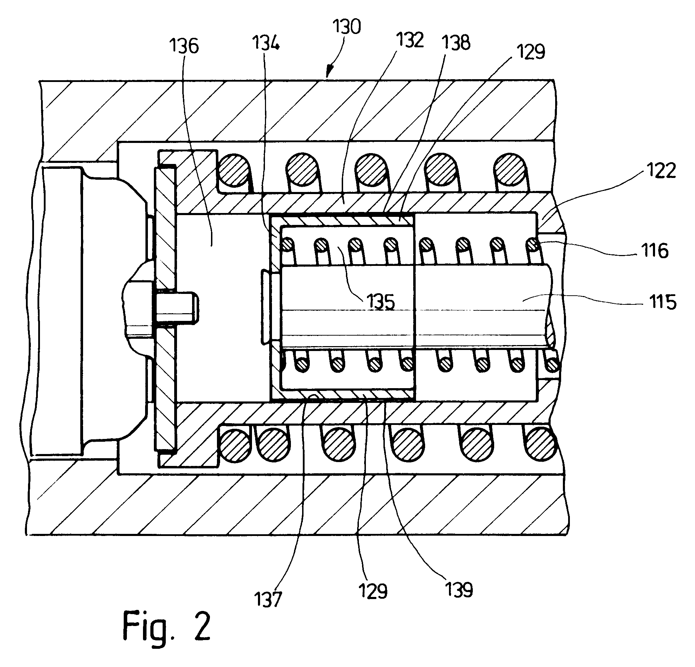

Bei dem in Fig. 2 gezeigten zweiten Ausführungsbeispiel sind für die Teile, die dem ersten Ausführungsbeispiel entsprechen, um 100 größere Bezugszeichen verwendet, so daß dadurch zur Vermeidung von Wiederholungen auf die Beschreibung des ersten Ausführungsbeispieles Bezug genommen ist.

Das zweite Ausführungsbeispiel in Fig. 2 unterscheidet sich vom ersten Ausführungsbeispiel allein dadurch, daß der ebenfalls als Topfkolben ausgebildete Kolben 129 umgekehrt und derart angeordnet ist, daß dessen wirksame Kolbenfläche, die durch den Kolbenboden 134 gebildet ist, dem Zylinderraum 136 im Zylinder 132 zugewandt ist. Dadurch nimmt das Innere 135 des topfförmigen Kolbens nicht an der Kompression teil. Vielmehr steht zur Kompression nur das Volumen innerhalb des Zylinderraumes 136 zur Verfügung.

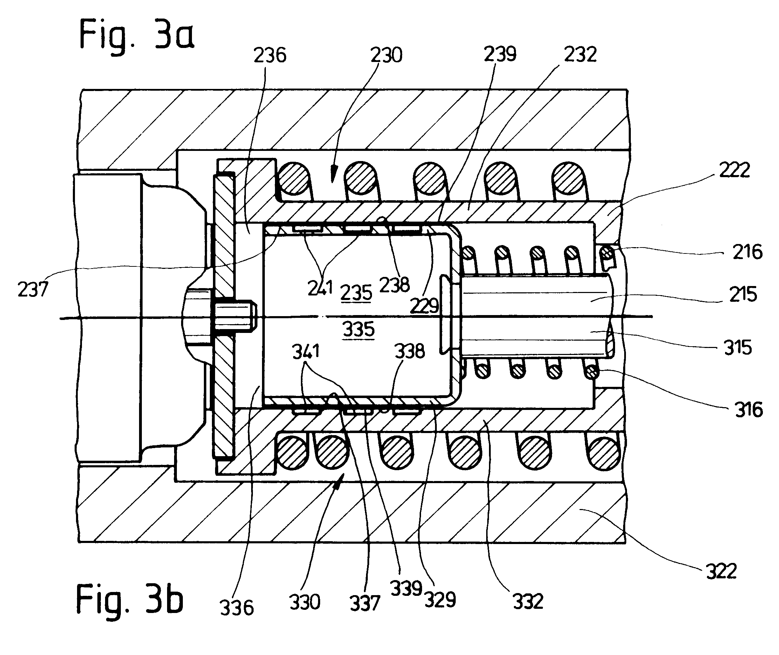

Bei dem in Fig. 3a gezeigten dritten Ausführungsbeispiel ist der Kolben 229 ebenfalls als Topfkolben analog Fig. 1 ausgebildet. Jedoch ist die äußere Umfangsfläche 238 des Kolbens 229 mit Vertiefungen 241 versehen, die hier aus mehreren in axialen Abständen voneinander angeordneten Ringnuten bestehen. Durch diese Vertiefungen 241 wird das Schwingungsdämpfungsverhalten der Schwingungsdämpfungseinrichtung 230 bestimmt. Dabei kann zusätzlich dazu auch noch ein Luftspalt 239 entsprechend demjenigen beim ersten Ausführungsbeispiel vorhanden sein, wenn dies für die gewünschte Schwingungsdämpfung erforderlich sein sollte.

Beim in Fig. 3b gezeigten vierten Ausführungsbeispiel weist die innere Umfangsfläche 337 des Zylinders 332 Vertiefungen 341 auf, insbesondere eine Ringnut, oder, wie hier gezeigt, mehrere in axialen Abständen voneinander angeordnete Ringnuten. Auch hier kann bedarfsweise zusätzlich noch ein Luftspalt 339 zwischen dem Kolben 329 und dem Zylinder 332 vorgesehen sein, wenn das Schwingungsdämpfungsverhalten durch die Vertiefungen 341 noch nicht das gewünschte Ergebnis bringen sollte.

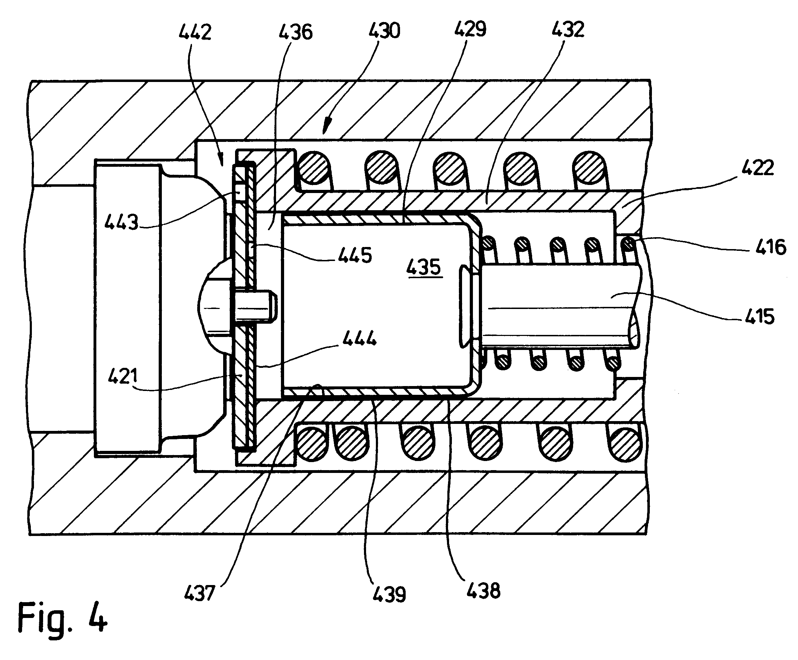

Bei dem in Fig. 4 gezeigten fünften Ausführungsbeispiel weist die Schwingungsdämpfungseinrichtung 430 ein Gummiplattenventil 442 auf. Letzteres ist dadurch gebildet, daß der Boden 421 des Zylinders 432, insbesondere die Platte, auf dem Kompressionsbereich mindestens einen Durchlaß 443 aufweist und auf einer Seite, vorzugsweise auf der dem Kolben 429 zugewandten Seite, mit einer insbesondere elastischen Platte 444 überdeckt ist. Die Platte 444 verdeckt den mindestens einen Durchlaß 443 und enthält an davon entfernter Stelle selbst zumindest einen Durchlaß 445, z.B. eine Öffnung. Die Platte 444 ist zwischen dem Boden 421 und dem im Zylinder 432 dafür vorgesehenen Sitz eingeklemmt und gehalten. Wird der Kolben 429 über das Betätigungsglied 415 axial in der einen oder anderen Richtung bewegt, so kann die im Zylinderraum 436 und im Inneren 435 enthaltene Luft zum einen über den bedarfsweise ebenfalls vorgesehenen Luftspalt 439 entweichen, mit der von der Größe und axialen Länge des Luftspaltes 439 abhängenden Charakteristik. Außerdem oder bei nicht vorhandenem Luftspalt 439 statt diesem kann die Luft den Weg durch den Durchlaß 445, die vom Boden 421 zumindest geringfügig abhebende Platte 444 und durch den Durchlaß 443 nehmen. Somit wird auch auf diese Weise eine Dämpfung der Schwingung des Betätigungsgliedes 415 erreicht.

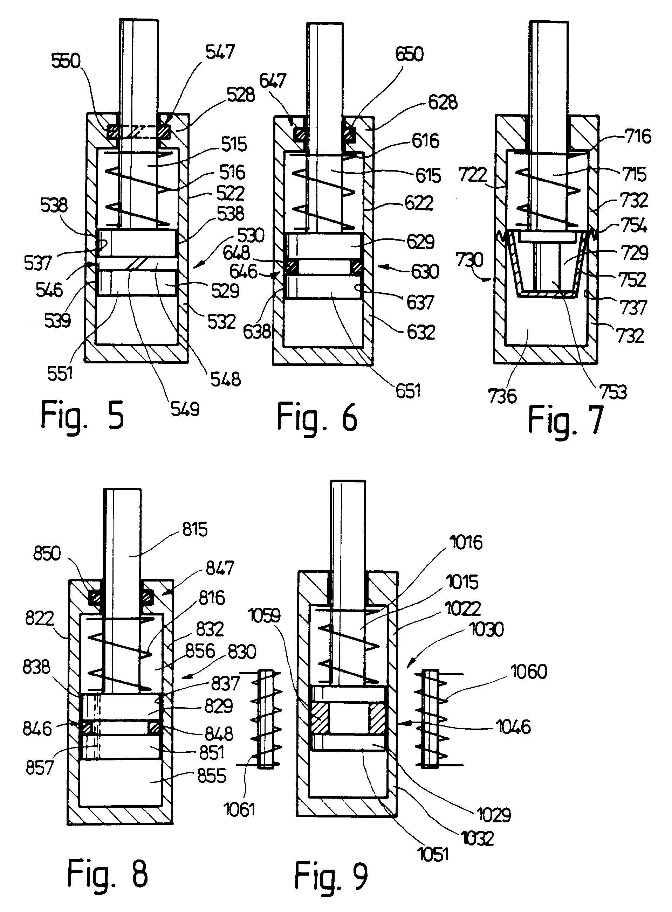

Bei dem in Fig. 5 gezeigten sechsten Ausführungsbeispiel weist die Schwingungsdämpfungseinrichtung 530 bedarfsweise eine Bremseinrichtung 546 auf, die zwischen dem Kolben 529 und dem Zylinder 532 vorgesehen ist. Zusätzlich oder statt dessen kann außerdem eine Bremseinrichtung 547 zwischen dem Betätigungsglied 515 einerseits und dem Gehäuse 522, insbesondere dessen Endabschnitt 528, andererseits vorgesehen sein, wobei die jeweilige Bremseinrichtung 546 bzw. 547 als mechanische Bremse, z.B. Reibungsbremse, wirksam ist, die die Axialverschiebung des Kolbens 529 bzw. des Betätigungsgliedes 515 relativ zum Zylinder 532 bremst und auf diese Weise eine Schwingungsdämpfung bewirkt. Zusätzlich dazu oder statt dessen kann diese Schwingungsdämpfungseinrichtung 530 entsprechend Fig. 1 einen Luftspalt 539 zwischen dem Kolben 529 und dem Zylinder 532 aufweisen.

Außerdem ist in Fig. 5 verdeutlicht, daß in der äußeren Umfangsfläche 538 des Kolbens 529 mindestens ein Ring 548 vorgesehen sein kann. Der Ring 548 kann radial außen der Abdichtung und/oder erhöhten Reibung dienen. Dieser mindestens eine Ring 548 ist z.B. als in Umfangsrichtung geteilter Ring ausgebildet, dessen Zwischenraum 549 im Teilungsbereich als Drossel ausgebildet ist und damit der Schwingungsdämpfung dient. Der Ring 548 kann als federnder oder elastischer Ring oder auch als Kolbenring ausgebildet sein. Er besteht z.B. aus Metall, Kunststoff, Gummi, Kunstgummi od. dgl. Er kann bei dem siebten Ausführungsbeispiel gemäß Fig. 6 auch als in Umfangsrichtung geschlossener Ring 648 und dabei z.B. als O-Ring ausgebildet sein. Auf jeden Fall ist der Ring 548 oder 648 als radial nach außen drückender Ring, insbesondere federnd vorgespannter Ring, ausgebildet, der über die Federvorspannung und den Luftdurchlaß zwischen der inneren Umfangsfläche 537 bzw. 637 und dem Ring und/oder durch die radial nach außen wirkende Anpreßkraft und ggf. erzeugte Haftreibung eine schwingungsdämpfende Wirkung erzeugt.

Die Bremseinrichtung 547, die zwischen dem Betätigungsglied 515 und dem Endabschnitt 528 vorgesehen ist, kann beispielsweise in gleicher Weise einen Ring 550 aufweisen, der analog dem Ring 548 gebildet ist. Der Ring 550 kann auch als geschlossener Ring ausgebildet sein, z.B. als O-Ring. In gleicher Weise ist auch beim siebten Ausführungsbeispiel in Fig. 6 ein entsprechender Ring 650 vorgesehen, der das Betätigungsglied 615 im Bereich des Endabschnittes 628 umschließt.

Bei einem anderen, nicht gezeigten Ausführungsbeispiel ist der Ring 548 gemäß Fig. 5 bzw. 648 gemäß Fig. 6 nicht im Kolben 529 bzw. 629, z.B. einer dortigen Ringnut, sondern statt dessen in der inneren Umfangsfläche 537 bzw. 637 des Zylinders 532 bzw. 632 angeordnet.

Ersichtlich unterscheidet sich das sechste Ausführungsbeispiel gemäß Fig. 5 von den vorangegangenen Ausführungsbeispielen auch noch dadurch, daß der Kolben 529 nicht als Topfkolben sondern statt dessen als Scheibenkolben 551 ausgebildet ist. Gleiches trifft auch für das siebte Ausführungsbeispiel in Fig. 6 hinsichtlich der dortigen Ausgestaltung des Scheibenkolbens 651 zu.

Beim achten Ausführungsbeispiel in Fig. 7 ist beim Kolben 729 ein z.B. rotationssymmetrischer Hutteil 752 vorgesehen, der radial nach außen drückt und an der inneren Umfangsfläche 737 des Zylinders 732 anliegt. Der Hutteil 752 ist z.B. in Richtung radial von innen nach außen federnd vorgespannt, so daß er mit entsprechender Vorspannung radial nach außen und gegen die Umfangsfläche 737 drückt. Beim achten Ausführungsbeispiel in Fig. 7 bildet der Hutteil 752 selbst den Kolben 729. Hierzu ist der Hutteil 752 fest an einer Verlängerung 753 des Betätigungsgliedes 715 angebracht. Der Hutteil 752 ist außerdem ringsum mittels eines Federelementes 754 am Zylinder 732 festgelegt. Das Federelement 754 kann z.B. aus einer Scheibe bestehen, die ein federndes Verhalten hat. Auf diese Weise ist das Betätigungsglied 715 zumindest in Grenzen axial verschiebbar mitsamt dem Hutteil 752, der trotz dieser Axialverschiebung federnd von innen nach außen gegen die innere Umfangsfläche 732 angedrückt ist.

Bei dem in Fig. 8 gezeigten neunten Ausführungsbeispiel sind auf beiden Axialseiten des Kolbens 829 Kompressionsräume 855 und 856 gebildet, die über eine Verbindung 857 miteinander verbunden sind, die hier durch den Kolben 829 z.B. axial hindurchführt und aus einem inneren Durchlaß im Kolben 829 gebildet ist, welcher einen Drosselkanal bildet und/oder drosselbar ist. Über diese Verbindung 857 sind die beiden Kompressionsräume 855 und 856 miteinander verbunden, so daß bei der Axialbewegung des Betätigungsgliedes 815 mitsamt dem Kolben 829 auf diese Weise eine Schwingungsdämpfung erfolgen kann.

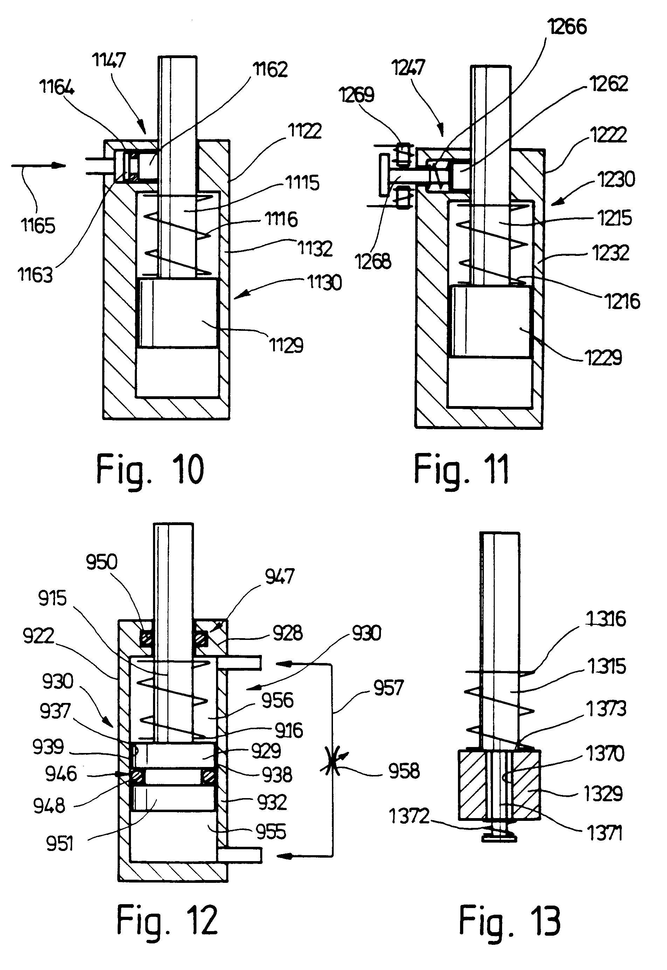

Bei einem anderen, nicht gezeigten Ausführungsbeispiel verläuft statt dessen die Verbindung 857 innerhalb des Zylinders 832, z.B. innerhalb der Zylinderwand, oder statt dessen auch außerhalb des Zylinders. Eine solche Variante zeigt das dreizehnte Ausführungsbeispiel in Fig. 12, bei dem die beiden Kompressionsräume 955 und 956 beidseitig des Kolbens 929 über eine schematisch angedeutete äußere Verbindung 957 miteinander verbunden sind, die eine schematisch angedeutete Drossel 958 enthält. Über die Drossel 958, die steuerbar sein kann, ist der Durchlaß durch die Verbindung 957 steuerbar, wodurch ebenfalls eine steuerbare Schwingungsdämpfungseinrichtung 930 geschaffen ist. Zusätzlich dazu kann ferner ein bereits beschriebener Luftspalt 939 vorgesehen sein und ferner mindestens ein Ring 948 am Kolben 929 sowie ein Ring 947 im Bereich des Endabschnittes 928, durch den das Betätigungsglied 915 nach außen geführt ist.

Auch beim zehnten Ausführungsbeispiel in Fig. 9 weist die Schwingungsdämpfungseinrichtung 1030 eine Bremseinrichtung 1046 auf, die zwischen dem Kolben 1029 und dem Zylinder 1032 vorgesehen ist. Diese Bremseinrichtung 1046 ist so beschaffen, daß der Kolben 1029 und mit diesem das Betätigungsglied 1015 elektromagnetisch in der einen oder anderen Axialrichtung verzögerbar ist. Hierzu ist am Kolben 1029 ein magnetisierbarer Teil 1059, z.B. Weicheisenring, angeordnet, dem mindestens eine elektrische Feldspule, beim gezeigten Ausführungsbeispiel in Fig. 9 zwei Feldspulen 1060, 1061, zugeordnet sind. Die beiden Feldspulen 1060, 1061 können wechselseitig aktiviert werden, so daß sie elektromagnetische Felder verschiedener Polarität erzeugen, wodurch der magnetisierbare Ring 1059 in der einen Axialrichtung oder in der gegensinnigen Axialrichtung abgestoßen und somit abgebremst wird und dadurch eine Schwingungsdämpfung für das Betätigungsglied 1015 erreicht ist.

Bei dem in Fig. 10 gezeigten elften Ausführungsbeispiel kann bedarfsweise für den Kolben 1129 eine Schwingungsdämpfungseinrichtung 1130 gemäß irgendeinem vorangegangenen Ausführungsbeispiel vorgesehen sein. Statt dessen oder zusätzlich dazu ist das Betätigungsglied 1115 mit einer Bremseinrichtung 1147 ausgestattet, die zwischen dem Betätigungsglied 1115 und dem Zylinder 1132 wirksam ist und auf diese Weise der Schwingungsdämpfung dient. Die Bremseinrichtung 1147 ist z.B. als mechanische Bremse, insbesondere Reibungsbremse, ausgebildet. Sie weist ein quer zur Längsachse des Kolbens 1129 und des Betätigungsgliedes 1115 betätigbares und gegen das Betätigungsglied 1115 andrückbares Bremsglied 1162 auf, das z.B. aus einem Stößel besteht. Das Bremsglied 1162 ist z.B. durch ein Druckmittel betätigbar. Zu diesem Zweck schließt sich an das Bremsglied 1162 axial ein Kolben 1163 an, der in einem Zylinderraum 1164 geführt ist und von außen mit einem Druckmittel, das durch Pfeil 1165 symbolisiert ist, im Bremssinn beaufschlagbar ist. Der Kolben 1163 kann vom Druckmittel gegen eine Rückstellfeder beaufschlagt werden, die bei Druckabfall eine selbsttätige Rückstellung des Kolbens 1163 bewirkt. Bei diesem Ausführungsbeispiel kann der Kolben 1129 auch völlig entfallen. Er wird z.B. durch eine Axialführung für das Betätigungsglied 1115 ersetzt.

Bei einem anderen, nicht gezeigten Ausführungsbeispiel ist eine Bremseinrichtung analog der Bremseinrichtung 1147 im Bereich des Kolbens 1129 zwischen diesem und dem Zylinder 1132 vorgesehen.

Bei dem zwölften Ausführungsbeispiel in Fig. 11 ist ebenfalls eine auf das Betätigungsglied 1215 quer einwirkende Bremseinrichtung 1247 vorgesehen, die ein an das Betätigungsglied 1215 andrückbares Bremsglied 1262 aufweist, das außerdem mit einer Feder 1266 in Bremsrichtung belastet ist. Anders als beim Ausführungsbeispiel in Fig. 10 ist das Bremsglied 1262 hier elektromagnetisch betätigbar. Hierzu trägt das Bremsglied 1262 einen Kern 1268, der mittels einer elektrischen Feldspule 1269 im Bremssinn bzw. gegensinnig dazu beaufschlagbar ist. Ansonsten gilt für das zwölfte Ausführungsbeispiel in Fig. 11 die vorangegangene Beschreibung.

Beim vierzehnten Ausführungsbeispiel in Fig. 13, das für sämtliche Ausführungsbeispiele steht, ist verdeutlicht, daß der Kolben 1329 beweglich, insbesondere schwimmend, am Betätigungsglied 1315 gehalten ist. Zu diesem Zweck enthält der Kolben 1329 eine axiale Bohrung 1370, durch die sich ein im Querschnitt reduzierter Abschnitt 1371 in Verlängerung des Betätigungsgliedes 1315 mit Bewegungsspiel hindurcherstreckt, an dessen Ende eine Feder 1372 abgestützt ist, die mit ihrem anderen Ende am in Fig. 13 unteren Ende des Kolbens 1329 abgestützt ist und den Kolben 1329 somit federnd gegen eine am Betätigungsglied 1315 vorgesehene Schulter 1373 am anderen Ende andrückt. Fig. 13 verdeutlicht außerdem, daß am Kolben 1329 die das Betätigungsglied 1315 umgebende, relativ schwache Feder 1316 angreift, die als Druckfeder ausgebildet ist und einerseits am Betätigungsglied 1315 bzw. am Kolben 1329 und andererseits am hier nicht weiter gezeigten Zylinder abgestützt ist. Dadurch wird der Kolben 1329 gegen die Schulter 1373 angedrückt, so daß durch flächige Anlage dort eine Abdichtung zwischen dem Kolben 1329 und dem Betätigungsglied 1315 erreicht ist. Bei Verschiebung des letzteren in Fig. 13 nach unten wird die Anpreßkraft noch erhöht. Die Anordnung der Feder 1316 ist so gewählt, wie bei allen vorangegangenen Ausführungsbeispielen.

Durch die schwimmende Halterung des Kolbens 1329 am Betätigungsglied 1315 ist der Kolben 1329 von der Lagerung und Längsführung des Betätigungsgliedes 1315 abgekoppelt, so daß er demgegenüber frei beweglich ist. Dies vereinfacht die Herstellung und Gestaltung der Führungsflächen für den Kolben 1329 bzw. das Betätigungsglied 1315.

Allen beschriebenen Ausführungsbeispielen ist gemeinsam, daß die jeweilige Schwingungsdämpfungseinrichtung eine Schwingung des Betätigungsgliedes wirksam und mit einfachen, kostengünstigen und platzsparenden Mitteln dämpft, so daß über das Betätigungsglied und die an letzterem bzw. dem Kolben angreifende, relativ schwache Feder ein selbsttätiger Ausgleich von etwaigen im Laufe der Lebensdauer des mittels Spannrolle beaufschlagten Kettentriebes, Riementriebes oder Zahnriemens erfolgenden Längenzunahmen erfolgt und somit den lebensdauerbedingten Veränderungen selbsttätig Rechnung getragen ist, ohne daß das dazu vorgesehene System im Betrieb, insbesondere bei niedrigeren Temperaturen, schwingen kann.

## Patentansprüche

1. Betätigungseinrichtung für eine Spannvorrichtung, insbesondere für Ketten- oder Riementriebe, z. B. für den Zahnriemen einer Brennkraftmaschine, mittels der eine Spannrolle in Abhängigkeit von der Temperatur der Brennkraftmaschine betätigbar ist, welche ein unter Federvorspannung stehendes, relativ zur Betätigungseinrichtung (14) in Abhängigkeit von der Temperatur der Brennkraftmaschine verschiebbares und auf die Spannrolle arbeitendes Betätigungsglied (15) aufweist, mit einer Schwingungsdämpfungseinrichtung (30; 130...1230) für das Betätigungsglied (15; 115...1315),
**dadurch gekennzeichnet,**
daß die Schwingungsdämpfungseinrichtung (30; 130...1230) zwischen der Betätigungseinrichtung und dem Betätigungsglied (15; 115 ... 315) angeordnet ist und ein von einer Rückstellfeder (23) beaufschlagtes, von einem thermostatischen Betätigungselement (17) gegen die Rückstellfeder (23) verschiebbares Gehäuse (22; 122 ... 1222) und im Gehäuse (22; 122 ... 1222) einen verschiebbaren Kolben (29; 129 ... 1329) aufweist, der an dem Betätigungsglied (15; 115 ... 1315) angreift, das unter der Vorspannung einer Feder (16; 116 ... 1316) steht, die einerseits am Kolben (29; 129 ... 1329) und andererseits am Gehäuse (22; 122 ... 1222) abgestützt ist und über die das Betätigungsglied (15; 115 ... 1315) vom Gehäuse (22; 122... 1222) federnd abgekoppelt ist, und daß mittels der Schwingungsdämpfungseinrichtung (30; 130 ... 1230) Schwingungen des Betätigungsgliedes (15; 115 ... 1315) und der Feder (16; 116 ... 1316) im Betrieb ausgeglichen werden.

2. Betätigungseinrichtung nach Anspruch 1,
**dadurch gekennzeichnet,**
daß die Schwingungsdämpfungseinrichtung (30; 130 ... 1230) mindestens eine Bremseinrichtung (546, 547; 646, 647; 846, 847; 946, 947; 1046; 1147; 1247) aufweist, die unmittelbar oder mittelbar zwischen dem Betätigungsglied (15; 115 ... 1315) einerseits und dem dieses enthaltenden Gehäuse (22; 122 ... 1222) andererseits vorgesehen ist.

3. Betätigungseinrichtung nach Anspruch 2,
**dadurch gekennzeichnet,**
daß die Bremseinrichtung (546, 547; 646, 647; 846, 847; 946, 947; 1147; 1247) als mechanische Bremse, insbesondere Reibungsbremse, ausgebildet ist.

4. Betätigungseinrichtung nach Anspruch 2 oder 3,
**dadurch gekennzeichnet,**
daß die Bremseinrichtung (546, 547; 646, 647; 846, 847; 946, 947; 1147; 1247) ein quer zur Längsachse des Betätigungsgliedes (15; 115 ... 1215) wirkendes und unmittelbar oder mittelbar gegen das Betätigungsglied (15; 115 ... 1215) drückendes Bremsglied, insbesondere einen Ring (548, 550; 648, 650; 848, 850; 948, 950) oder ein etwa kolbenartiges, querverschiebbares Bremsglied (1162; 1262) aufweist.

5. Betätigungseinrichtung nach Anspruch 4,
**dadurch gekennzeichnet,**
daß das Bremsglied (1162; 1262) durch Druckmittel (1165) oder elektromagnetisch (1268, 1269) betätigbar ist.

6. Betätigungseinrichtung nach einem der Ansprüche 1 bis 5,
**dadurch gekennzeichnet,**
daß die das Betätigungsglied (15; 115 ... 1315) beaufschlagende schwache Feder (16; 116 ... 1316) als Druckfeder ausgebildet ist.

7. Betätigungseinrichtung nach einem der Ansprüche 1 bis 6,
**dadurch gekennzeichnet,**
daß die Schwingungsdämpfungseinrichtung (30; 130 ... 930) einen Gasdämpfer, insbesondere einen Luftdämpfer, aufweist, insbesondere zusätzlich zur Bremseinrichtung (546, 547; 646, 647; 846, 847; 946, 947; 1046; 1147; 1247) oder anstelle letzterer.

8. Betätigungseinrichtung nach einem der Ansprüche 1 bis 7,
**dadurch gekennzeichnet,**
daß der Gasdämpfer, insbesondere Luftdämpfer, einen Zylinder (32; 132 ... 1232) und im Zylinder (32; 132 ... 1232 den verschiebbaren Kolben (29; 129 ... 1329) aufweist, wobei im überwiegend axialen Bereich zwischen dem Kolben (29; 129 ... 1329) und dem Zylinder (32; 132 ... 1232) auf zumindest einer Kolbenseite ein Gasvolumen, insbesondere Luftvolumen, vorhanden ist, das komprimierbar bzw. dekomprimierbar ist.

9. Betätigungseinrichtung nach Anspruch 8,
**dadurch gekennzeichnet,**
daß der Zylinder (32; 132 ... 1232) einen Teil des verschiebbaren, das Betätigungsglied (15; 115 ... 1315) mit seiner rückstellenden Feder (16; 116 ... 1316) enthaltenden Gehäuses (22; 122 ... 1222) bildet.

10. Betätigungseinrichtung nach einem der Ansprüche 1 bis 9 ,
**dadurch gekennzeichnet,**
daß der Kolben (29; 129 ... 1229) mit dem Betätigungsglied (15; 115 ... 1215) fest verbunden ist.

11. Betätigungseinrichtung nach einem der Ansprüche 1 bis 9,
**dadurch gekennzeichnet,**
daß der Kolben (1329) relativ beweglich, z.B. schwimmend, mit dem Betätigungsglied (1315) verbunden ist und diesem gegenüber an der Verbindungsstelle abgedichtet ist.

12. Betätigungseinrichtung nach einem der Ansprüche 1 bis 11,
**dadurch gekennzeichnet,**
daß der Kolben (29; 129 ... 1329) als Scheibenkolben (551; 651; 851; 951) oder insbesondere als Topfkolben (29; 129; 229; 329; 429; 729) ausgebildet ist.

13. Betätigungseinrichtung nach Anspruch 12,
**dadurch gekennzeichnet,**
daß der als Topfkolben ausgebildete Kolben (29; 229; 329; 429) derart angeordnet ist, daß dessen Inneres (35; 235; 335; 435) zum Zylinderraum (36; 236; 336; 436) hin geöffnet ist und ein komprimierbares Volumen enthält.

14. Betätigungseinrichtung nach Anspruch 12,
**dadurch gekennzeichnet,**
daß der als Topfkolben ausgebildete Kolben (129; 729) derart angeordnet ist, daß dessen wirksame Kolbenfläche dem Zylinderraum (136; 736) zugewandt ist.

15. Betätigungseinrichtung nach einem der Ansprüche 1 bis 14,
**dadurch gekennzeichnet,**
daß zwischen der inneren Umfangsfläche (37; 137; 237; 337; 437; 537; 637; 937) des Gehäuses (22; 122; 222; 322; 422; 522; 622; 822; 922) und der äußeren Umfangsfläche (38; 138; 238; 338; 438; 538; 638; 938) des Kolbens (29; 129; 229; 329; 429; 529; 629; 929) ein eine Drossel bildender Luftspalt (39; 139; 239; 339; 439; 539) vorgesehen ist, der zu der dem Kompressionsraum abgewandten Seite entlüftet ist.

16. Betätigungseinrichtung nach einem der Ansprüche 1 bis 15,
**dadurch gekennzeichnet,**
daß der Luftspalt (39; 139; 239; 339; 439; 539) zwischen dem Kolben (29; 129; 229; 329; 429; 529) und dem Gehäuse (22; 122; 222; 322; 422; 522) etwa 1/10 mm oder größer bemessen ist.

17. Betätigungseinrichtung nach einem der Ansprüche 1 bis 16,
**dadurch gekennzeichnet,**
daß die innere Umfangsfläche (37; 137; 237; 337; 437; 537; 637; 737; 937) des Gehäuses (22; 122; 222; 322; 422; 522; 622; 722; 922) und/oder die äußere Umfangsfläche (38; 138; 238; 338; 438; 538; 638; 938) des Kolbens (29; 129; 229; 329; 429; 529; 629; 729; 829; 929) mit einer verschleißfesten Schicht, insbesondere Beschichtung, versehen ist.

18. Betätigungseinrichtung nach einem der Ansprüche 1 bis 17,
**dadurch gekennzeichnet,**
daß die innere Umfangsfläche (337) des Gehäuses (322) und/oder die äußere Umfangsfläche (238) des Kolbens (229) Vertiefungen (341 bzw. 241), insbesondere eine Ringnut oder mehrere in axialen Abständen voneinander angeordnete Ringnuten, enthält.

19. Betätigungseinrichtung nach einem der Ansprüche 1 bis 18,
**dadurch gekennzeichnet,**
daß das Gehäuse (22; 122; 222; 322; 422) als Zylinderboden (21) eine damit feste oder separate Platte aufweist und vom ausschiebbaren Teil, insbesondere Arbeitskolben (20), des thermostatischen Betätigungselements (17), insbesondere eines Dehnstoffelements, gegen die Wirkung der zugeordneten Rückstellfeder (23) verschiebbar ist, der am Gehäuse (22), insbesondere am Zylinderboden (21), angreift.

20. Betätigungseinrichtung nach Anspruch 19,
**dadurch gekennzeichnet,**
daß die Platte des Zylinderbodens (21) axial an einem etwa rohrförmigen Gehäuseteil anliegt, das mittels der Rückstellfeder (23) gegen die Platte angedrückt ist und bei Betätigung des thermostatischen Betätigungselements (17) über die Platte und gegen die Rückstellfeder (23) verschiebbar ist, und daß der den Kolben (29) der Schwingungsdämpfungseinrichtung (30) umgebende Teil des Gehäuses (22) den Zylinder (32) bildet.

21. Betätigungseinrichtung nach einem der Ansprüche 1 bis 20,
**dadurch gekennzeichnet,**
daß das Betätigungsglied (15; 115 ... 1315) einen zum etwa rohrförmigen Gehäuse (22; 122 ... 1222) koaxialen, darin befindlichen Stößel aufweist, der mit dem Kolben (29; 129 ... 1319) der Schwingungsdämpfungseinrichtung (30; 130 ... 1230) verbunden ist und aus dem Gehäuse (22; 122 ... 1222) heraus vorsteht.

22. Betätigungseinrichtung nach einem der Ansprüche 1 bis 21,
**dadurch gekennzeichnet,**
daß die Schwingungsdämpfungseinrichtung (430) ein Plattenventil, insbesondere Gummiplattenventil (442), aufweist.

23. Betätigungseinrichtung nach Anspruch 22,
**dadurch gekennzeichnet,**
daß der Zylinderboden (421), insbesondere die Platte, auf dem Kompressionsbereich mindestens einen Durchlaß (443) aufweist und auf einer Seite, vorzugsweise auf der dem Kolben (429) zugewandten Seite, mit einer elastischen Platte (444) überdeckt ist, die den mindestens einen Durchlaß (443) verdeckt und an davon entfernter Stelle selbst mindestens einen Durchlaß (445) enthält.

24. Betätigungseinrichtung nach einem der Ansprüche 1 bis 23,
**dadurch gekennzeichnet,**
daß in der inneren Umfangsfläche (537; 637; 837; 937) des Gehäuses (522; 622; 822; 922) und/oder in der äußeren Umfangsfläche (538; 638; 838; 938) des Kolbens (529; 629; 829; 929) mindestens ein Ring (548; 648; 848; 948) angeordnet ist, wobei der Ring (548; 648; 848; 948) der Abdichtung des Kompressionsraumes und/oder der Bildung eines Luftspaltes dazwischen und/oder zur erhöhten Reibung dazwischen dienen kann.

25. Betätigungseinrichtung nach einem der Ansprüche 1 bis 24,
**dadurch gekennzeichnet,**
daß in der Außenfläche des Betätigungsgliedes (515; 615; 815; 915) und/oder in der das Betätigungsglied (515; 615; 815; 915) führenden Innenfläche des Gehäuses (522; 622; 822; 922) mindestens ein Ring (550; 650; 850; 950) angeordnet ist, der der Abdichtung und/oder der Bildung eines Luftspaltes dazwischen und/oder zur Erhöhung der Reibung dazwischen dienen kann.

26. Betätigungseinrichtung nach Anspruch 24 oder 25,
**dadurch gekennzeichnet,**
daß der mindestens eine Ring (548, 550) als geteilter Ring ausgebildet ist, dessen Zwischenraum (549) im Teilungsbereich als Drossel ausgebildet ist.

27. Betätigungseinrichtung nach einem der Ansprüche 24 bis 26,
**dadurch gekennzeichnet,**
daß der mindestens eine Ring (548, 550; 648, 650; 848, 850; 948, 950) als federnder oder elastischer Ring ausgebildet ist.

28. Betätigungseinrichtung nach einem der Ansprüche 24 bis 27,
**dadurch gekennzeichnet,**
daß der mindestens eine Ring (548, 550; 648, 650; 848, 850; 948, 950) als radial nach außen drückender Ring, insbesondere federnd vorgespannter Ring, ausgebildet ist.

29. Betätigungseinrichtung nach einem der Ansprüche 24 bis 28,
**dadurch gekennzeichnet,**
daß der mindestens eine Ring (548; 550; 648, 650; 848, 850; 948, 950) als Kolbenring ausgebildet ist.

30. Betätigungseinrichtung nach einem der Ansprüche 24 bis 29 ,
**dadurch gekennzeichnet,**
daß der mindestens eine Ring (548, 550; 648, 650; 848, 850; 948, 950) aus Metall, Kunststoff, Gummi, Kunstgummi od. dgl. besteht.

31. Betätigungseinrichtung nach einem der Ansprüche 24 bis 30,
**dadurch gekennzeichnet,**
daß der mindestens eine Ring (548, 550; 648, 650; 848, 850; 948, 950) aus einem O-Ring besteht.

32. Betätigungseinrichtung nach einem der Ansprüche 1 bis 31,
**dadurch gekennzeichnet,**
daß der Kolben (729) auf seiner äußeren Umfangsfläche einen radial nach außen drückenden, insbesondere federnd vorgespannten, gegen die innere Umfangsfläche (737) des Gehäuses (722) angedrückten Hutteil (752) aufweist oder durch einen derartigen Hutteil (752) gebildet ist.

33. Betätigungseinrichtung nach einem der Ansprüche 1 bis 32,
**dadurch gekennzeichnet,**
daß der Kolben (1029) und/oder das Betätigungsglied (1015) elektromagnetisch in der einen oder anderen Axialrichtung verzögerbar ist.

34. Betätigungseinrichtung nach Anspruch 33,
**gekennzeichnet durch**
einen magnetisierbaren Teil (1059) am Kolben (1029) oder des Kolbens (1029) bzw. am Betätigungsglied (1015) oder des Betätigungsgliedes (1015) und mindestens eine zugeordnete elektrische Feldspule (1060, 1061), die z.B. außerhalb des Zylinders (1032) angeordnet ist.

35. Betätigungseinrichtung nach einem der Ansprüche 1 bis 34,
**dadurch gekennzeichnet,**
daß auf beiden Axialseiten des Kolbens (829; 929) zwischen diesem und dem Gehäuse (822; 922) Kompressionsräume (855, 856; 955, 956) gebildet sind und daß die beiden Kompressionsräume (855, 856; 955, 956) über eine vorzugsweise steuerbare Verbindung (857; 957) miteinander verbindbar sind.

36. Betätigungseinrichtung nach Anspruch 35,
**dadurch gekennzeichnet,**
daß die Verbindung (857) durch den Kolben (829) hindurchführt, z.B. aus einem im wesentlichen axialen inneren Durchlaß im Kolben (829) gebildet ist, der einen Drosselkanal bildet und/oder drosselbar ist.

37. Betätigungseinrichtung nach Anspruch 35 oder 36,
**dadurch gekennzeichnet,**
daß die Verbindung (857; 957) innerhalb des Gehäuses (822; 922), z.B. der Zylinderwandung, oder außerhalb des Gehäuses (822; 922) verläuft und einen Drosselkanal bildet und/oder drosselbar (Drossel 958) ist.

38. Betätigungseinrichtung nach einem der Ansprüche 11 bis 37,
**dadurch gekennzeichnet,**
daß der mit dem Betätigungsglied (1315) relativ dazu beweglich verbundene Kolben (1329) mittels einer Feder(1372) mit einer Stirnseite axial gegen eine zugewandte Schulterfläche (1373) des Betätigungsgliedes (1315) angedrückt ist.

## Claims

1. Activation device for a tensioning mechanism, in particular for chain or belt drives, e.g. for the gear drive of an internal combustion engine, by means of which a tension roller can be activated depending on the temperature of the internal combustion engine, which has a spring biassed activating member (15) displaceable relative to the activation device (14) depending on the temperature of the internal combustion engine and operating on the tension roller, with a vibration damping mechanism (30; 130 ... 1230) for the activating member (15; 115 ... 1315),
**characterised in that**
the vibration damping mechanism (30; 130 ... 1230) is disposed between the activation device and the activating member (15; 115 ... 315) and has a housing (22; 122 ... 1222) loaded by a restoring spring (23) displaceable by a thermostatic activating element (17) against the restoring spring (23) and a displaceable piston (29; 129 ... 1329) in the housing (22; 122 ... 1222), said piston engaging with the activating member (15; 115; ... 1315) biassed by a spring (16; 116 ... 1316) which is supported on one side on the piston (29; 129 ... 1329) and one the other side on the housing (22; 122 ... 1222) and by which the activating member (15; 115 ... 1315) is spring disconnected from the housing (22; 122 ... 1222) and in that by means of the vibration damping mechanism (30; 130 ... 1230) vibrations of the activating member (15; 115 ... 1315) and the spring (16; 116 ... 1316) are balanced out in operation.

2. Operating device according to Claim 1,
**characterised in that**
the vibration damping mechanism (30; 130 ... 1230) has at least one braking mechanism (546, 547; 646, 647; 846, 847; 946, 947; 1046; 1147; 1247) which is furnished directly or indirectly between the activating member (15; 115 ... 1315) on one side and the housing (22; 122 ... 1222) containing the latter on the other side.

3. Activation device according to claim 2,
**characterised in that**
the braking mechanism (546, 547; 646, 647; 846, 847; 946, 947; 1147; 1247) is constructed as a mechanical brake, in particular a friction brake.

4. Activation device according to claim 2 or 3,
**characterised in that**
the brake mechanism (546, 547; 646, 647; 846, 847; 946, 947; 1147; 1247) has a braking member perpendicular to the longitudinal axis of the activating member (15; 115 ... 1215), in particular a ring (548, 550; 648, 650; 848, 850; 948, 950) or a roughly piston-like, laterally displaceable braking member (1162; 1262).

5. Operating device according to claim 4
**characterised in that**
the braking member (1162; 1262) can be activated by compressing means (1165) or electromagnetically (1268, 1269).

6. Operating device according to one of claims 1 to 5,
**characterised in that**
the weak spring (16; 116 ... 1316) loading the activating member (15; 115 ... 1315) is constructed as a compression spring.

7. Operating device according to one of claims 1 to 6,
**characterised in that**
the vibration damping mechanism (30; 130 ... 930) comprises a gas damper, in particular an air damper, in particular in addition to the braking mechanism (546, 547; 646, 647; 846, 847; 946, 947; 1046; 1147; 1247) or instead of the latter.

8. Activation device according to one of claims 1 to 7,
**characterised in that**
the gas damper, in particular air damper, has a cylinder (32; 132 ... 1232), whereby the displaceable piston (29; 129 ... 1329) is positioned inside the cylinder (32; 132 .. 1232), and in the mainly axial region between the piston (29; 129 ... 1329) and the cylinder (32; 132 ... 1232) a volume of gas, in particular air, is present on at least one piston side, that is compressible or decompressible.

9. Activation device according to claim 8
**characterised in that**
the cylinder (32; 132 ... 1232) forms a part of the displaceable housing (22; 122 ... 1222) containing the activating member (15; 115 ... 1315) with its restoring spring (16; 116 ... 1316).

10. Activation device according to one of claims 1 to 9,
**characterised in that**
the piston (29; 129 ... 1229) is firmly connected to the activating member (15; 115 ... 1215).

11. Activation device according to one of claims 1 to 9,
**characterised in that**
the piston (1329) is connected to the activating member (1315) to be relatively movable, e.g. floating, and is sealed off from the latter at the connecting point.

12. Activation device according to one of claims 1 to 11,
**characterised in that**
the piston (29; 129 ... 1329) is constructed as a disc piston (551; 651; 851; 951) or in particular as a pot piston (29; 129; 229; 329; 429; 729).

13. Activation device according to claim 12,
**characterised in that**
the piston (29; 229; 329; 429) designed as a pot piston is disposed so that its inside (35; 235; 335; 435) opens to the cylinder cavity (36; 236; 336; 436) and contains a compressible volume.

14. Activation device according to claim 12
**characterised in that**
the piston constructed as a pot piston (129; 729) is disposed such that its effective piston surface faces the cylinder cavity (136; 736).

15. Activation device according to one of claims 1 to 14,
**characterised in that**
between the inner peripheral surface (37; 137; 237; 337; 437; 537; 637; 937) of the housing (22; 122; 222; 322; 422; 522; 622; 822; 922) and the external peripheral surface (38; 138; 238; 338; 438; 538; 638; 938) of the piston (29; 129; 229; 329; 429; 529; 629; 929) an air gap (39; 139; 239; 339; 439; 539) forming a choke is provided which is vented at the side not facing the compression chamber.

16. Activation device according to one of claims 1 to 15,
**characterised in that**
the air gap (39; 139; 239; 339; 439; 539) between the piston (29; 129; 229; 329; 429; 529) and the housing (22; 122; 222; 322; 422; 522) is about 1/10 mm or greater in size.

17. Activation device according to one of claims 1 to 16,
**characterised in that**
the inner peripheral surface (37; 137; 237; 337; 437; 537; 637; 737; 937) of the housing (22; 122; 222; 322; 422; 522; 622; 722; 922) and/or the outer peripheral surface (38; 138; 238; 338; 438; 538; 638; 938) of the piston (29; 129; 229; 329; 429; 529; 629; 729; 829; 929) is provided with a wear-resistant layer, in particular a coating.

18. Activation device according to one of claims 1 to 17,
**characterised in that**
the inner peripheral surface (337) of the housing (322) and/or the outer peripheral surface (238) of the piston (229) comprises depressions (341 or 241), in particular an annular groove or several annular grooves disposed axially distant from one another.

19. Activation device according to one of claims 1 to 18,
**characterised in that**
as a cylinder base (21) the housing (22; 122; 222; 322; 422) has a disc fixed thereto or separate therefrom and is displaceable from the sliding part, in particular the working piston (20) of the thermostatic activating element (17), in particular an extensible element, against the effect of the assigned restoring spring (23) which engages with the housing (22), in particular the cylinder base (21).

20. Activation device according to claim 19
**characterised in that**
the disc of the cylinder base (21) rests axially on a tubular housing part which is pressed against the disc by means of a restoring spring (23) and is displaceable on activating the thermostatic activating element (17)over the disc and against the restoring spring (23) and in that the part of the housing (22) encircling the piston (29) of the vibration damping mechanism (30) forms the cylinder (32).

21. Activation device according to one of claims 1 to 20,
**characterised in that**
the activating member (15; 115 ... 1315) has a slide coaxial in relation to the tubular housing (22; 122 ... 1222) which is connected to the piston (29; 129 ... 1319) of the vibration damping device (30; 130 ... 1230) and projects out of the housing (22; 122 ... 1222).

22. Activation device according to one of claims 1 to 21,
**characterised in that**
the vibration damping mechanism (430) has a disc valve, in particular a rubber disc valve (442).

23. Activation device according to claim 22,
**characterised in that**
the cylinder base (421) in particular the disc has at least one opening (443) on the compression area and on one side, preferably on the side, facing the piston (429), is covered with an elastic disc (444) which covers the at least one opening (443) and at a point removed therefrom contains at least one opening (445).

24. Activation device according to one of claims 1 to 23,
**characterised in that**
at least one ring (548; 648; 848; 948) is disposed in the inner peripheral surface (537; 637; 837; 937) of the housing (522; 622; 822; 922) and/or in the outer peripheral surface (538; 638; 838; 938) of the piston (529; 629; 829; 929), whereby the ring (548; 648; 848; 948) can serve to seal the compression chamber and/or form an air gap in between and/or increase the friction in between.

25. Activation device according to one of claims 1 to 24,
**characterised in that**
in the outer surface of the activating member (515; 615; 815; 915) and/or in the inner surface of the housing (522; 622; 822; 922) guiding the activating member (515; 615; 815; 915) at least one ring (550; 650; 850; 950) is disposed which can serve to seal and/or form an air gap in between and/or increase the friction in between.

26. Activation device according to claim 24 or 25,
**characterised in that**
the at least one ring (548, 550) is constructed as a divided ring the inter-space of which (549) in the divided part is formed as a choke.

27. Activation device according to one of claims 24 to 26,
**characterised in that**
the at least one ring (548, 550; 648, 650; 848, 850; 948, 950) is constructed as a spring or elastic ring.

28. Activation device according to one of claims 24 to 27,
**characterised in that**
the at least one ring (548, 550; 648, 650; 848, 850; 948, 950) is constructed as a radially outwards pressing ring, in particular a spring biassed ring.

29. Activation device according to one of claims 24 to 28,
**characterised in that**
the at least one ring (548, 550; 648, 650; 848, 850; 948, 950) is constructed as a piston ring.

30. Activation device according to one of claims 24 to 29,
**characterised in that**
the at least one ring (548, 550; 648, 650; 848, 850; 948, 950) is made of metal, plastic, rubber, synthetic rubber or the like.

31. Activation device according to one of claims 24 to 30,
**characterised in that**
the at least one ring (548, 550; 648, 650; 848, 850; 948, 950) is an O-ring.

32. Activation device according to one of claims 1 to 31,
**characterised in that**
the piston (729) has on its outer peripheral surface a radially outwards pressing, in particular spring biassed hat part (752) pressed against the inner peripheral surface (737) of the housing (722) or is formed by a similar hat part (752).

33. Activation device according to one of claims 1 to 32,
**characterised in that**
the piston (1029) and/or the activating member (1015) can be slowed down electromagnetically in one or other axial direction.

34. Activation device according to claim 33,
**characterised by**
a magnetisable part (1059) on the piston (1029) or of the piston (1029) or on the activating member (1015) or of the activating member (1015) and at least one electrical field coil (1060, 1061), which is disposed e.g. outside the cylinder (1032).

35. Activation device according to one of claims 1 to 34,
**characterised in that**
compression chambers are formed (855, 856; 955, 956) on both axial sides of the piston (829; 929) between the latter and the housing (822; 922) and in that both compression chambers (855, 856; 955, 956) can be connected together by a preferably controllable connection (857; 957).

36. Activation device according to claim 35,
**characterised in that**
the connection (857) leads through the piston (829), e.g. from a mainly axial inner opening in the piston (829) which forms a choke tube and/or is chokeable.

37. Activation device according to claim 35 or 36,
**characterised in that**
the connection (857; 957) runs inside the housing (822; 922), e.g. the cylinder wall or outside the housing (822; 922) and forms a choke tube and/or is chokeable (choke 958).

38. Activation device according to one of claims 11 to 37,
**characterised in that**
the piston (1329) connected to the activating member (1315) movable relative thereto is pressed by means of a spring (1372) with an end face axially against a shoulder surface (1373) of the activating member (1315).

## Revendications

1. Dispositif de commande pour un dispositif tendeur, en particulier pour des commandes par chaîne ou par courroie, par exemple pour la courroie dentée d'un moteur à combustion interne, au moyen duquel une poulie de tension peut être actionnée en fonction de la température du moteur à combustion interne, comprenant un organe de commande (15) mis en précontrainte élastique, déplaçable par rapport au dispositif de commande (14) en fonction de la température du moteur à combustion interne, et agissant sur la poulie de tension, avec un dispositif amortisseur d'oscillations (30; 130 ... 1230) pour l'organe de commande (15; 115 ... 1315) , **caractérisé en ce** que le dispositif amortisseur d'oscillations (30; 130 ... 1230) est inséré entre le dispositif de commande et l'organe de commande (15; 115 ... 315) et comprend un carter (22; 122 ... 1222) sollicité par un ressort de rappel (23), déplaçable par un élément de commande thermostatique (17) contre le ressort de rappel (23), et un piston (29; 129 ... 1329) déplaçable à l'intérieur du carter (22; 122 ... 1222), qui agit sur l'organe de commande (15; 115 ... 1315) soumis à la précontrainte d'un ressort (16; 116 ... 1316) lequel s'appuie d'une part sur le piston (29; 129 ... 1329) et d'autre part sur le carter (22; 122 ... 1222), et est découplé de manière élastique du carter (22; 122 ... 1222) par l'intermédiaire de l'organe de commande (15; 115 ... 1315), et en ce que des oscillations de l'organe de commande (15; 115 ... 1315) et du ressort (16; 116 ... 1316) sont compensées en service au moyen du dispositif amortisseur d'oscillations (30; 130 ... 1230).

2. Dispositif de commande selon la revendication 1, caractérisé en ce que le dispositif amortisseur d'oscillations (30; 130 ... 1230) comprend au moins un dispositif de freinage (546, 547; 646, 647; 846, 847; 946, 947; 1046; 1147; 1247) qui est prévu directement ou indirectement entre l'organe de commande (15; 115 ... 1315) d'une part et le carter (22; 122 ... 1222) contenant celui-ci, d'autre part.

3. Dispositif de commande selon la revendication 2, caractérisé en ce que le dispositif de freinage (546, 547; 646, 647; 846, 847; 946, 947; 1147; 1247) est réalisé sous la forme d'un frein mécanique, en particulier d'un frein à friction.

4. Dispositif de commande selon l'une des revendications 2 ou 3, caractérisé en ce que le dispositif de freinage (546; 547; 646, 647; 846, 847; 946, 947; 1147; 1247) comprend un organe de freinage agissant transversalement à l'axe longitudinal de l'organe de commande (15; 115 ... 1215) et poussant directement ou indirectement contre l'organe de commande (15; 115 ... 1215), en particulier un anneau (548, 550; 648, 650; 848, 850; 948, 950) ou un élément de freinage (1162; 1262) sensiblement conformé en piston et déplaçable dans le sens transversal.

5. Dispositif de commande selon la revendication 4, caractérisé en ce que l'élément de freinage (1162; 1262) peut être actionné par un fluide sous pression (1165) ou de manière électromagnétique (1268, 1269).

6. Dispositif de commande selon l'une des revendications 1 à 5, caractérisé en ce que le faible ressort (16; 116 ... 1316) sollicitant l'organe de commande (15; 115 ... 1315) est conformé en ressort de pression.

7. Dispositif de commande selon l'une des revendications 1 à 6, caractérisé en ce que le dispositif amortisseur d'oscillations (30; 130 ... 930) comprend un amortisseur à gaz, notamment un amortisseur à air, en particulier en supplément du dispositif de freinage (546, 547; 646, 641; 846, 847; 946, 947; 1046; 1147; 1247) ou à la place de celui-ci.

8. Dispositif de commande selon l'une des revendications 1 à 7, caractérisé en ce que l'amortisseur à gaz, notamment l'amortisseur à air, comprend un cylindre (32; 132 ... 1232) et, dans le cylindre (32; 132 ... 1232), le piston mobile (29; 129 ... 1329), dans la section sensiblement axiale entre le piston (29; 129 ... 1329) et le cylindre (32; 132 ... 1232) étant placé un volume de gaz, notamment un volume d'air, compressible ou décompressible se trouvant au moins sur l'un des côtés du piston.

9. Dispositif de commande selon la revendication 8, caractérisé en ce que le cylindre (32; 132 ... 1232) fait partie du carter (22; 122 ... 1222) mobile qui contient l'organe de commande (15; 115 ... 1315) avec son ressort de rappel (16; 116 ... 1316).

10. Dispositif de commande selon l'une des revendications 1 à 9, caractérisé en ce que le piston (29; 129 ... 1229) est solidaire de l'organe de commande (15; 115 ... 1215).

11. Dispositif de commande selon l'une des revendications 1 à 9, caractérisé en ce que le piston (1329) est couplé de manière relativement mobile, par exemple flottante, avec l'organe de commande (1315) et rendu étanche par rapport à celui-ci au point de raccordement.

12. Dispositif de commande selon l'une des revendications 1 à 11, caractérisé en ce que le piston (29; 129 ... 1329) est conformé en piston à disque (551; 651; 851; 951) ou notamment en piston en pot (29; 129; 229; 329; 429; 729).

13. Dispositif de commande selon la revendication 12, caractérisé en ce que le piston (29; 229; 329; 429) réalisé sous la forme de piston en pot est disposé de telle façon que son intérieur (35; 235; 335; 435) est ouvert vers l'intérieur du cylindre (36; 236; 336; 436) et contient un volume compressible.

14. Dispositif de commande selon la revendication 12, caractérisé en ce que le piston (129; 729) réalisé sous la forme de piston en pot est disposé de telle façon que sa surface de piston active est tournée vers l'intérieur du cylindre (136; 736).

15. Dispositif de commande selon l'une des revendications 1 à 14, caractérisé en ce qu'entre la surface périphérique intérieure (37; 137; 237; 337; 437; 537; 637; 937) du carter (22; 122; 222; 322; 422; 522; 622; 822; 922) et la surface périphérique extérieure (38; 138; 238; 338; 438; 538; 638; 938) du piston (29; 129; 229; 329; 429; 529; 629; 929) est prévue une fente d'aération (39; 139; 239; 339; 439; 539) qui forme un étranglement et qui est ventilée en direction du côté détourné du volume de compression.

16. Dispositif de commande selon l'une des revendications 1 à 15, caractérisé en ce que la fente d'aération (39; 139; 239; 339; 439; 539) entre le piston (29; 129; 229; 329; 429; 529) et le carter (22; 122; 222; 322; 422; 522) est d'environ 1/10 mm ou plus.

17. Dispositif de commande selon l'une des revendications 1 à 16, caractérisé en ce que la surface périphérique intérieure (37; 137; 237; 337; 437; 537; 637; 737; 937) du carter (22; 122; 222; 322; 422; 522; 622; 722; 922) et/ou la surface périphérique extérieure (38; 138; 238; 338; 438; 538; 638; 938) du piston (29; 129; 229; 329; 429; 529; 629; 729; 829; 929) sont munies d'une couche anti-usure, notamment d'un revêtement.

18. Dispositif de commande selon l'une des revendications 1 à 17, caractérisé en ce que la surface périphérique intérieure (337) du carter (322) et/ou la surface périphérique extérieure (238) du piston (229) présentent des creux (341 et respectivement 241), en particulier une rainure annulaire ou plusieurs rainures annulaires disposées à distance axiale les unes des autres.

19. Dispositif de commande selon l'une des revendications 1 à 18, caractérisé en ce que le carter (22; 122; 222; 322; 422) comprend comme fond de cylindre (21) une plaque solidaire ou séparée de celui-ci, et qu'il peut être déplacé par l'élément sortant, notamment le piston de travail (20), de l'élément de commande thermostatique (17), notamment un élément en matière expansible, contre l'effet du ressort de rappel (23) associé, qui agit sur le carter (22), notamment sur le fond de cylindre (21).

20. Dispositif de commande selon la revendication 19, caractérisé en ce que la plaque du fond de cylindre (21) est appliquée axialement contre un élément de carter sensiblement tubulaire lequel est poussé contre la plaque au moyen du ressort de rappel (23) et peut être déplacé, lors de l'actionnement de l'élément de commande thermostatique (17), par l'intermédiaire de la plaque et contre le ressort de rappel (23), et en ce que l'élément du carter (22) entourant le piston (29) du dispositif amortisseur d'oscillations (30) forme le cylindre (32).

21. Dispositif de commande selon l'une des revendications 1 à 20, caractérisé en ce que l'organe de commande (15; 115 ... 1315) comprend un poussoir orienté coaxialement par rapport au carter (22; 122 ... 1222) sensiblement tubulaire et logé dans celui-ci, qui est couplé avec le piston (29; 129 ... 1319) du dispositif amortisseur d'oscillations (30; 130 ... 1230) et dépasse du carter (22; 122 ... 1222).

22. Dispositif de commande selon l'une des revendications 1 à 21, caractérisé en ce que le dispositif amortisseur d'oscillations (430) comprend une soupape à plaque, notamment une soupape à plaque en caoutchouc (442).

23. Dispositif de commande selon la revendication 22, caractérisé en ce que le fond de cylindre (421), notamment la plaque, présente dans la zone de compression au moins un passage (443) et qu'il est recouvert sur un côté, de préférence sur le côté tourné vers le piston (429), par une plaque (444) élastique qui masque le passage (443) au nombre d'au moins un et présente elle-même au moins un passage (445) éloigné de ce dernier.

24. Dispositif de commande selon l'une des revendications 1 à 23, caractérisé en ce que dans la surface périphérique intérieure (537; 637; 837; 937) du carter (522; 622; 822; 922) et/ou dans la surface périphérique extérieure (538; 638; 838; 938) du piston (529; 629; 829; 929) est disposé au moins un anneau (548; 648; 848; 948), l'anneau (548; 648; 848; 948) pouvant assurer l'étanchéité du volume de compression et/ou la formation d'une fente d'aération entre lesdites surfaces et/ou une friction accrue entre lesdites surfaces.

25. Dispositif de commande selon l'une des revendications 1 à 24, caractérisé en ce que dans la surface extérieure de l'organe de commande (515; 615; 815; 915) et/ou dans la surface intérieure du carter (522; 622; 822; 922) qui guide l'organe de commande (515; 615; 815; 915), est disposé au moins un anneau (550; 650; 850; 950) qui peut servir à réaliser l'étanchéité et/ou à former une fente d'aération entre lesdites surfaces et/ou à augmenter la friction entre lesdites surfaces.

26. Dispositif de commande selon l'une des revendications 24 ou 25, caractérisé en ce que le ou les anneaux (548, 550) au nombre d'au moins un sont réalisés sous la forme d'un anneau divisé dont l'interstice (549) dans la région de division est conformé en étranglement.

27. Dispositif de commande selon l'une des revendications 24 à 26, caractérisé en ce que le ou les anneaux (548, 550; 648, 650; 848, 850; 948, 950) au nombre d'au moins un sont conformés en anneau souple ou élastique.

28. Dispositif de commande selon l'une des revendications 24 à 27, caractérisé en ce que le ou les anneaux (548, 550; 648, 650; 848, 850; 948, 950) au nombre d'au moins un sont conformés en anneau qui pousse radialement vers l'extérieur, en particulier en anneau mis en précontrainte élastique.

29. Dispositif de commande selon l'une des revendications 24 à 28, caractérisé en ce que le ou les anneaux (548, 550; 648, 650; 848, 850; 948, 950) au nombre d'au moins un sont conformés en segment de piston.

30. Dispositif de commande selon l'une des revendications 24 à 29, caractérisé en ce que le ou les anneaux (548, 550; 648, 650; 848, 850; 948, 950) au nombre d'au moins un sont réalisés en métal, matière plastique, caoutchouc, caoutchouc synthétique ou analogues.

31. Dispositif de commande selon l'une des revendications 24 à 30, caractérisé en ce que l'anneau (548, 550; 648, 650; 848, 850; 948, 950) au nombre d'au moins un sont constitués par un joint torique.

32. Dispositif de commande selon l'une des revendications 1 à 31, caractérisé en ce que le piston (729) présente sur sa surface périphérique extérieure un élément de chapeau (752) poussant radialement vers l'extérieur, en particulier mis en précontrainte élastique, et appliqué contre la surface périphérique intérieure (737) du carter (722), ou qu'il est constitué par un tel élément de chapeau (752).

33. Dispositif de commande selon l'une des revendications 1 à 32, caractérisé en ce que le piston (1029) et/ou l'organe de commande (1015) peuvent être ralentis de manière électromagnétique dans l'une ou l'autre direction axiale.

34. Dispositif de commande selon la revendication 33, caractérisé en ce qu'il comprend un élément magnétisable (1059) sur le piston (1029) ou du piston (1029) et respectivement sur l'organe de commande (1015) ou de l'organe de commande (1015), et au moins une bobine de champ électrique (1060, 1061) associée laquelle est disposée par exemple à l'extérieur du cylindre (1032).

35. Dispositif de commande selon l'une des revendications 1 à 34, caractérisé en ce que sur les deux côtés axiaux du piston (829; 929), entre celui-ci et le carter (822, 922), sont formés des volumes de compression (855, 856; 955, 956), et que les deux volumes de compression (855, 856; 955, 956) peuvent être mis en communication par l'intermédiaire d'une liaison (857; 957), de préférence commandable.

36. Dispositif de commande selon la revendication 35, caractérisé en ce que la liaison (857) traverse le piston (829) et est constituée par exemple par un passage sensiblement axial à l'intérieur du piston (829), qui forme un canal d'étranglement et/ou peut être étranglé.

37. Dispositif de commande selon l'une des revendications 35 ou 36, caractérisé en ce que la liaison (857; 957) s'étend à l'intérieur du carter (822; 922), par exemple de la paroi de cylindre, ou à l'extérieur du carter (822; 922) et forme un canal d'étranglement et/ou peut être étranglée (étranglement 958).

38. Dispositif de commande selon l'une des revendications 11 à 37, caractérisé en ce que le piston (1329) couplé avec l'organe de commande (1315) et déplaçable par rapport à celui-ci, est appliqué avec une face frontale, au moyen d'un ressort (1372), axialement contre un épaulement (1373) de l'organe de commande (1315) qui lui fait face.
